# EUROPEAN PATENT SPECIFICATION

(11) **EP 0 379 229 B1**
(45) Date of publication and mention of the grant of the patent: **27.07.1994**
(21) Application number: 90104329.9
(22) Date of filing: 20.05.1986
(51) Int. Cl.: G01N 29/24, A61B 8/00

(54) **Ultrasonic probe**
Ultraschallsonde
Sonde ultrasonore

(30) Priority: 20.05.1985 JP 107355/85; 20.05.1985 JP 107356/85; 23.07.1985 JP 162404/85
(43) Date of publication of application: 25.07.1990
(62) Divisional of application: 86303833.7
(73) Proprietor: MATSUSHITA ELECTRIC INDUSTRIAL CO., LTD., Kadoma-shi, Osaka-fu, 571 (JP)
(72) Inventor: Saito, Koetsu, Nakano-ku, Tokyo 164 (JP); Kawabushi, Masami, Yokohama, Kanagawa 226 (JP)
(74) Representative: Crawford, Andrew Birkby

(56) References cited:
- EP-A- 0 025 092
- GB-A- 2 035 010
- Proceedings of the IEEE 1984 Ultrasonics Symposium, vol. 1, B.R. McAvoy (Editor), November 14-16, 1984, Dallas, Texas, US, A.A. Shaulov et al: "Performance of ultrasonic transducers made from composite piezoelectric materials", pages 545-548

## Description

This invention relates to an ultrasonic probe used in an ultrasonic diagnostic apparatus for medical use.

It is a recent trend to use ultrasonic probes made of compound piezoelectric materials in the field of ultrasonic diagnostic apparatus for medical use and the like.

Such ultrasonic probes using compound piezoelectric materials have been proposed, including, for example the construction mentioned in Proc. IEEE Ultrasonic Symposium, 1984, by A. A. Shaulov et al at pages 545-548.

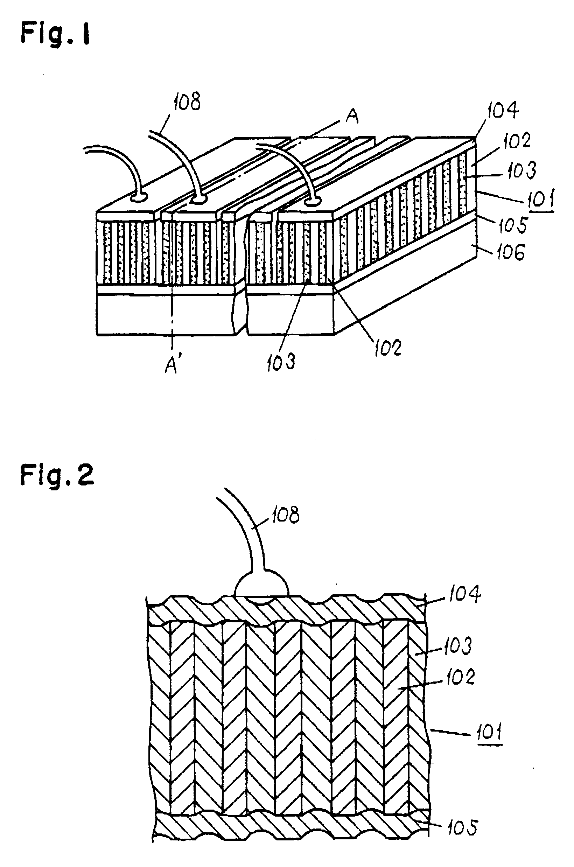

Referring now to Figs 1 and 2, a conventional array type ultrasonic probe using compound piezoelectric materials is described.

Fig. 1 is a perspective view showing the essential features of the probe, and Fig. 2 is a magnified sectional view of the portion connecting the lead wires thereof. Numeral 101 denotes a piezoelectric material which is composed of a piezoelectric ceramic material 102 extending in one dimension, and an organic polymer material 103 extending in three dimensions and surrounding said piezoelectric ceramic material 102. On one surface of this compound piezoelectric material 101, a plurality of electrodes 104 are disposed by vacuum evaporation by way of mask or the like, while a common electrode 105 is installed on the opposite surface of the compound piezoelectric material 101 by vacuum evaporation, and an acoustic matching layer 106 made of epoxy resin or the like is adhered to the common electrode 105 surface (the sound wave radiation surface) in order to lead the sound waves efficiently to the subject to be examined. To the individual electrodes 104, lead wires 108 are connected by wire bonding or similar means, and are in turn connected to electrical terminals (not shown).

Thus, by applying electrode signals, which are controlled externally to the electrodes 104, 105 at both surfaces of the compound piezoelectric material 101, ultrasonic waves may be radiated from the acoustic matching layer 106 surface.

In the compound piezoelectric material 101, the piezoelectric ceramic 102 is made of PZT, and the organic high polymer material 103 may be made of an epoxy resin or the like, and such a compound piezoelectric material 101 may, in electro-mechanical coupling coefficient, obtain a characteristic nearly equal to K₃₃, the electro-mechanical coupling coefficient of the piezoelectric ceramic 102, and may be lower in acoustic impedance as compared with that of piezoelectric ceramic alone (in the case of the PZT compound, it is about 20 to 35 x 10⁵ g/cm².s) For example, if, by the ratio by volume, 25% of the piezoelectric ceramic 102, and 75% of the organic polymer 103 of epoxy resin is used, the acoustic impedance is about 8 x 10⁵ g/cm².s, and its matching with the subject such as the human body (of which acoustic impedance is 1.5 to 1.8 x 10⁵ g/cm².s) is much better than in the case of piezoelectric ceramic alone, and only one layer of acoustic matching layer 106 is enough to improve the efficiency (sensitivity) of transmission and reception. Also since the piezoelectric ceramic 102 extends one-dimensionally only, leaks of sound waves to other elements (acoustic crosstalks) are few, which means that the orientation resolution is excellent.

Accordingly, the usefulness of ultrasonic probes using compound piezoelectric material 101 with a single acoustic matching layer 106 is known in the art.

However, as in the conventional construction, when lead wires are connected to the electrodes, after forming an array of electrodes 104 by masking or other means on one side of the compound piezoelectric material 101, in spite of the advantage of high precision forming of electrodes 104 in an array form by employing semiconductor manufacturing technology, it is very difficult in practice to connect lead wires 108 by wire bonding or other means after forming electrodes 104. That is, the compound piezoelectric material 101 is, as mentioned above, made of piezoelectric ceramic material 102 and organic polymer 103 of epoxy resin, and this part is magnified in Fig. 2. More specifically, due to the difference in hardness and coefficient of thermal expansion between the piezoelectric ceramic material 102 and organic polymer 103, the surface of the organic polymer 103 is not flat, but undulated, and it is hard to avoid this roughness. When electrodes 104 are formed on such undulated surface in a thickness of about 1 micron by vacuum evaporation or other means, the electrodes 104 are unevenly formed on the undulated surface of the compound piezoelectric material 101. It is extremely difficult to connect lead wires 108 by wire bonding uniformly and firmly on such non-flat surface. In particular, since wire bonding at the position of organic polymer 103 is difficult, it is required to connect lead wires 108 by wire bonding at the position of piezoelectric ceramic material 102. However, at high frequency, the shape of the piezoelectric ceramic 102 becomes less than 70 microns (7 x 10⁻⁵m), and wire bonding is barely possible. but when the lead wires 108 are connected by wire bonding at the position of the electrodes 104 which are arranged in a plurality, the strength is lower and reliability is insufficient, or at higher frequency it is hard to connect lead wires 108.

In the case where array-type ultrasonic probes are used, the method of driving by sequentially scanning the transmission and reception signals to be applied to an array comprising a plurality of electrodes 104, and the method of scanning by varing the running direction of the ultrasonic waves by driving, with a very slight time delay, the transmission and reception signal to be applied to a plurality of array of electrodes 104 are known. In these instances it is important that the sound waves may not propagate to the adjacent electrodes when the array of electrodes 104 are driven; that is, the acoustic crosstalk be small, in order to enhance the orientation resolution. However, in such a conventional structure, the acoustic matching layer 106 is not isolated from the plurality of electrodes 104, but made of one continuous plate, and the unnecessary sound waves propagated to the adjacent electrodes 104 from the acoustic matching layer 106, which caused the deterioration of the orientation resolution.

An acoustic impedance matching device for a piezoelectric transducer is disclosed in US-A-4,326,418. The impedance matching window for the ultrasonic transducer comprises a periodic array of stepped structures. Each stepped structure comprises a plurality of parallel matching strips disposed side-by-side on an active surface of a piezoelectric ceramic material. The object is that the frequency response of this structure, which couples wideband pulses from the transducer to, for example, human tissue, should approach a Gaussian response.

EP-A-0025092 describes an ultrasonic probe having a piezoelectric element bearing a plurality of electrodes on one surface and a common electrode on the other. The piezoelectric element is composed of piezoelectric ceramics material and is diced. An acoustic matching layer is provided on the other major surface of the piezoelectric element.

GB-A-2035010 describes an ultrasonic probe using a piezoelectric element composed of piezoelectric ceramics material. The piezoelectric element is divided into a plurality of spaced linear sections. In order to improve energy transfer from this high acoustic impedance source to the human body two quarter wavelength matching transformer layers are provided. In order to overcome refraction effects in the two acoustic matching layers grooves may be provided therein.

### SUMMARY OF THE INVENTION

This invention is intended to solve the above-discussed problems of the conventional ultrasonic probes, and it is hence a primary object of this invention to present an ultrasonic probe capable of connecting to electrical terminals easily and enhancing the reliability.

It is another object of this invention to present an ultrasonic probe capable of enhancing the orientation resolution.

The present invention provides an ultrasonic probe, comprising:
a composite piezoelectric element composed of a piezoelectric ceramic and a material smaller in acoustic impedance than the piezoelectric ceramic;
a plurality of electrodes disposed on one surface of the piezoelectric element;
a plurality of electric terminals connected to respective electrodes;
a common electrode disposed on the other surface of the piezoelectric element; and
an acoustic matching layer disposed on the common electrode; characterised in that
the acoustic matching layer is divided by grooves into a plurality of sections at intervals corresponding to the intervals between the plurality of electrodes, and the dividing grooves are filled with a material having an acoustic impedance substantially different from that of the acoustic matching layer.

### BRIEF DESCRIPTION OF THE DRAWINGS

Fig. 1 is a perspective view showing a conventional ultrasonic probe made of compound piezoelectric material;
Fig. 2 is a sectional drawing of view A-A' of Fig. 1;
Fig. 3 is a cross sectional view of one of the embodiments of the ultrasonic probe according to the present invention, the ultrasonic probe being made from a compound piezoelectric material;
Fig. 4 is a plan view of the ultrasonic probe shown in Fig. 3;
Figs. 5 to 7 refer to further embodiments of this invention, in which Fig. 5 is a partial perspective view of the ultrasonic probe, Fig. 6 is a sectional view of the ultrasonic probe of Fig. 5, and Fig. 7 is a partial perspective view of the compound piezoelectric material; and
Fig. 8 depicts a still further embodiment of the ultrasonic probe of this invention.

### DETAILED DESCRIPTION OF THE INVENTION

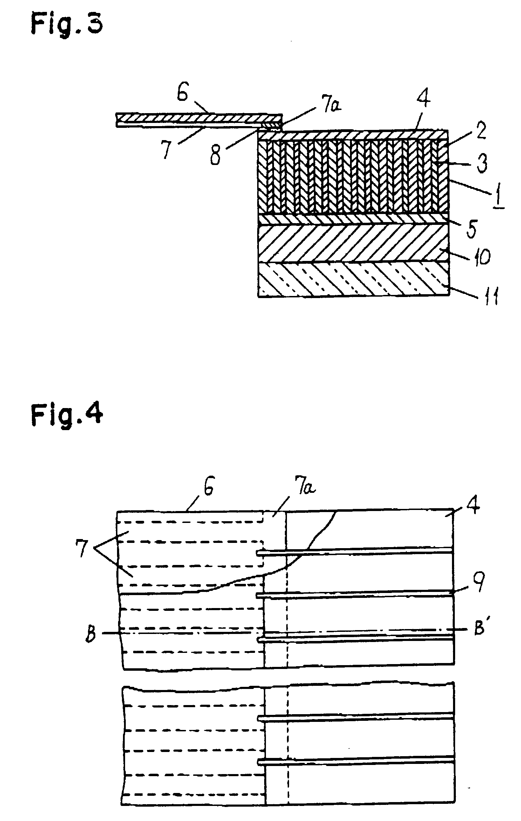

One of the embodiments of this invention is described below while referring to the accompanying drawings. Fig. 3 is a sectional view of the ultrasonic probe of the present invention, and Fig. 4 is a plan view of the ultrasonic probe of Fig. 3. As shown in Fig. 3 which is a sectional diagram of view B-B' in Fig. 4, a compound piezoelectric material 1 is composed of a piezoelectric ceramic material 2 such as PZT, PCM or the like compound extending in one dimension, and a material of low acoustic impedance, such as epoxy resin or other organic polymer material 3, extending in three dimensions thereby surrounding the piezoelectric ceramic material 2. On opposing surfaces of the compound piezoelectric material 1, electrodes 4, 5 are disposed on the entire surface by vacuum deposition, plating or other means. A positive linkage part 7a of electrical terminals 7, such as flexible cables formed in the same pattern as in the desired electrode spacing on a substrate 6, is adhered to the negative part of one of the electrodes 4 of the compound piezoelectric material 3 by solder or other conductor (such as conductive adhesive) 8, and the electrical terminals 7 and electrodes 4 of the compound piezoelectric material 1 are electrically connected. Then, at desired intervals as shown in Fig. 4, grooves 9 are formed in the positive linkage part 7a of electrical terminals and the electrodes 4 of the compound piezoelectric material 1 by means of dicing machine or the like to divide them. Next, as shown in Fig. 3 an acoustic matching layer 10 made of epoxy resin or the like is formed, be pouring in or other means, on the electrode (common electrode) 5, opposite to the electrodes 4 to which the electrical terminals 7 are connected, and an acoustic lens 11 such as silicone rubber is formed on this acoustic matching layer 10 in order to focus the ultrasonic waves as required.

In this way, electrodes 4 are disposed on the whole surface of the compound piezoelectric material 1, and electrical terminals 7 are adhered to part of the electrodes 4 by using conductive adhesive 8 or the like to effect electrical connection, then the electrodes 4 of the compound piezoelectric material 1 and the linkage part 7a of the electrical terminals 7 are divided to form an array. Therefore, the process of masking which is conventionally required to arrange the electrodes in an array form is not needed, if the frequency is made higher and the dimensions of the piezoelectric ceramic material 2 may be reduced so that the electrical terminals 7 can be connected easily, without any problem, even if the electrode spacings of array are very narrow. Moreover, the electrical terminals 7 are formed on the substrate 6 and are high in strength, and they are directly adhered to the electrodes 4, without being coupled with lead wires, to make electrical connection so that the connecting portions of the electrical terminals 7 are very strong, which enhances to reliability. In this embodiment, the electrodes 4 are first disposed on the compound piezoelectric material 1, and then electrical terminals 7 are adhered by means of conductive adhesive 8 or the like to conduct with each other, but in the present invention it is also possible to adhere the electrical terminals 7 to part of the compound piezoelectric material 1 by using an insulating material such as epoxy resin, then install electrodes 4 on the compound piezoelectric material 1, and then vacuum evaporate the electrodes 4 to part of the electrical terminals 7 and compound piezoelectric material 1 to provide electrical connections, and form (by division) the electrodes 4 in an array. Also the above embodiment refers to the application to the so-called array type ultrasonic probe arranged in a linear form, but it is evident that this invention may be also applied to various types of ultrasonic probe, such as two-dimensional array layout ultrasonic probe and arc layout ultrasonic probe.

According to this invention, as clear from the description above, electrodes and electrical terminals to connect to these electrodes are provided on the surface of a compound piezoelectric material, and these electrodes and electric terminals are divided into a number to connect to electrical terminals. Therefore, as the frequency is made higher, the size of the piezoelectric ceramic material of the compound piezoelectric material becomes smaller, and if the resulting electrode spacings in the array become very narrow, the electrical terminals 7 can still be easily connected to the electrodes and the junction of the electrodes 4 and electrical terminals 7 are increased in strength, so that the reliability may be improved.

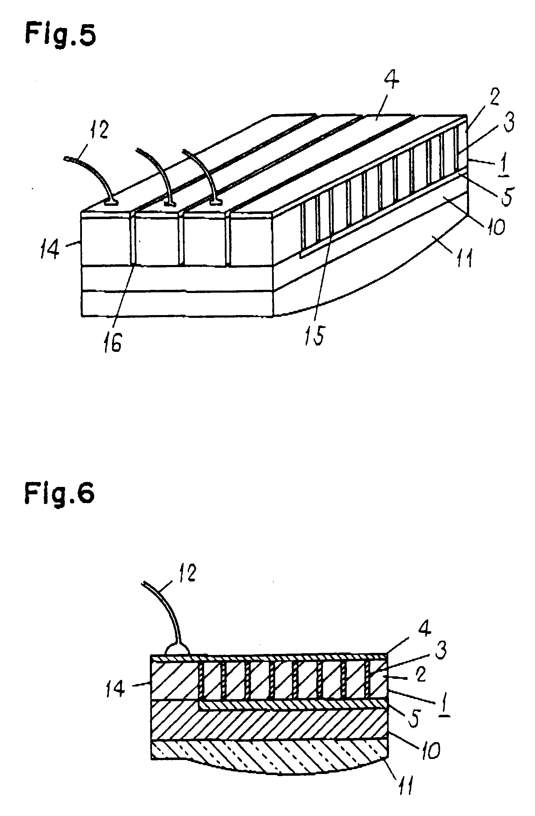

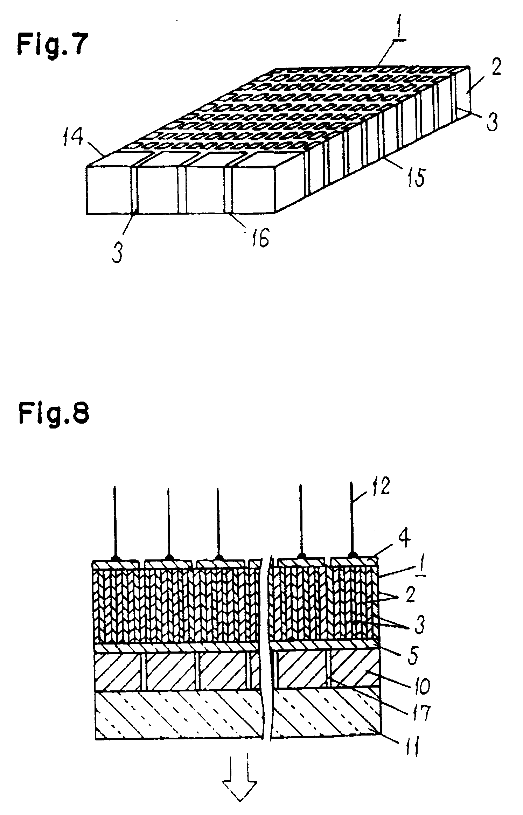

Fig. 5 is a partial perspective view of the ultrasonic probe in another embodiment of the present invention; Fig. 6 is its sectional view; and Fig. 7 is a partial perspective view of the compound piezoelectric material.

As shown in Fig. 5, the compound piezoelectric material 1 is composed of a piezoelectric ceramic material 2 of PZT, PCM or the like compound extending in one dimension, and organic polymer material 3 such as epoxy resin extending in three dimensions adjacent said piezoelectric ceramic material 2. The piezoelectric ceramic material 2 is divided by forming dividing grooves 15 in the form of a grating by a dicing machine or the like, leaving only the electrical terminal connection portion 14 (this portion 14 is also divided by dividing grooves 16 so as to be at same intervals as in the array-shaped electrodes 4 described below). These dividing trenches 15, 16 are filled with organic polymer material 3 which is then hardened. At this time, the organic polymer material 3 should be preferably deformed in vacuum in order to fill uniformly with few bubbles. The piezoelectric ceramic material 2 and organic polymer material 3 are machined to a thickness of desired frequency by polishing or other means, and make up the compound piezoelectric material 1. Therefore, since the electrical terminal connection portion 14 is almost completely made of piezoelectric ceramic material, it does not have function as compound piezoelectric material. As shown in Figs. 5 and 6, on one surfaced of the compound piezoelectric material 1, a plurality of array-formed electrodes 4 are provided by vacuum evaporation or similar method by way of mask or the like and spaced apart by dividing grooves 16. On the other surface, a common electrode 5 is provided, by vacuum evaporation or other method, excluding the electrical terminal connection portion 14. On the free surface of the common electrode 5, an acoustic matching layer 10 of epoxy resin or the like of thickness equal to 1/4 wavelength of the vibrational signals is provided by adhering or pouring. Furthermore, as required, an acoustic lens 11 of silicone rubber or the like is provided by adhering or pouring out the free surface of matching layer 10. Acoustic lens 11 is provided in order to focus ultrasonic waves on the outside of the acoustic matching layer 10. To the plurality of electrodes 4 arranged in an array, the electrical terminals 12 are connected by wire bonding or other means from the positions corresponding to the electric terminal connection portion 14.

Thus, since the electric terminal connection portion 14 is made of piezoelectric ceramic material 2 almost completely when fabricating the compound piezoelectric material 1, the electrical terminals 12 may be easily and firmly connected by wire bonding or other method. Therefore, the reliability is high. In addition, since common electrode 5 is not provided at the position corresponding to the electrical terminal connection portion 14 on the opposite side of the array-formed electrodes 4 in the compound piezoelectric material 1, this portion does not vibrate. That is, since only the compound piezoelectric material 1 other than the electrical terminal connection portion 14 vibrates, the desired ultrasonic beam may be obtained. Furthermore, since electrical terminal connection portion 14 of the piezoelectric ceramic material 2 is divided at the same intervals as in the array of electrodes 4, acoustic crosstalk to the adjacent elements may be reduced, so that an ultrasonic resolution high in orientation resolution may be obtained.

In the embodiment described above, firstly the electrical terminal connection portion 14 of the piezoelectric ceramic material 2 was divided at the same intervals as in the array of electrodes 4, and then arrays of electrodes 4 were evaporated by using mask or the like, but other methods may be applicable. For example, electrodes for forming an array of electrodes 4 may be provided on the whole surface on one surface of the compound piezoelectric material 1 having electrical terminal connection portion 14, and a common electrode 5 provided on the other side. Then an acoustic matching layer 10 is disposed on this common electrode 5, and the electrodes and compound piezoelectric material 1 then divided into arrays by dicing machine or the like to compose arrays of electrodes 7, and finally the electrical terminals 12 are connected by wire bonding or other method. Alternatively in a similar manner to the embodiment shown in Figs. 3 and 4, it may also be possible to provide electrodes for forming arrays of electrodes 4 on the whole of one surface of the compound piezoelectric material 1 having electrical terminal connection portion 14, to dispose a common electrode 5 on the other surface to install an acoustic matching layer 10 on this common electrode 5, to provide plate-shaped terminals as plate-shaped electric terminals 11, by soldering or by using conductive adhesive, on the electrodes at the position corresponding to the electrical terminal connection portion 14 of the compound piezoelectric material 1, and to divide the electrical-terminals, electrodes, and compound piezoelectric material 1 into arrays, thereby connecting the electric terminals 11.

The above described embodiments refer to applications of the so-called array type ultrasonic probe arranged in a linear form, but it is evident that the present invention may be equally applied to other types of ultrasonic probe, such as two-dimensional layout ultrasonic probe and arc layout ultrasonic probe.

Thus, in the embodiment shown in Fig. 7, the electrical terminal connection portion is provided in the piezoelectric ceramic material of the compound piezoelectric material, and arrays of electrodes are provided on one surface of this compound piezoelectric material, while a common electrode is provided on the other surface, and the electrical terminals are connected from the arrays of the electrodes at the position corresponding to the electrical material connection portion. Therefore, as the frequency is increased, if the size of piezoelectric ceramic material 2 of the compound piezoelectric material 1 is reduced or the spacing of electrodes in the arrays are narrowed, the electrical terminals can still be connected easily. Moreover, since the electrical terminal connection portion is high in strength, the reliability may be enhanced.

Fig. 8 is a sectional view of an ultrasonic probe in a further embodiment of the present invention, in which the compound piezoelectric material 1 is made of a piezoelectric ceramic material 2 of PZT, PCM or the like compound extending in one dimension and an organic polymer 3 such as epoxy resin extending in three dimensions adjacent the piezoelectric ceramic material 2. If, for example, the PZT compound piezoelectric ceramic material 2 and organic polymer 3 made of epoxy resin are used in the quantities 25% and 75% by volume, respectively, then the acoustic impedance is 8 x 10⁵ g/cm².s. On one surface of this compound piezoelectric material 1, a plurality of electrodes 4 are arranged at specified intervals, while a common electrode 5 is formed on the other surface by vacuum deposition or other process. On this common electrode 5, an acoustic matching layer 10 of thickness equal to 1/4 of wavelength of the vibrational signals is formed by adhering or pouring. Supposing the subject is a human body (of which acoustic impedance is 1.5 to 1.8 x 10⁵ g/cm².s), the suited acoustic impedance of the acoustic matching layer 10 is about 3 to 4 x 10⁵ g/cm².s, and the material having this value is epoxy resin, and epoxy resin is used in the acoustic matching layer 10 is divided by forming dividing grooves 17 by dicing machine or the like at the same intervals as those of the electrodes 4. On the free surface of divided acoustic matching layer 10, an acoustic lens 11 of silicone rubber or similar material is formed by adhering or pouring in order to focus ultrasonic waves, and the dividing grooves 17 of each acoustic matching layer 10 are filled with adhesive or similar material as acoustic lens 11. As the material to fill up the dividing grooves 17 of the acoustic matching layer 10, any substance which has a greatly different acoustic impedance to the acoustic matching layer 10 and has a high ultrasonic damping factor may be used, such as a blend of silicone rubber and micro-balloons.

Thus, by dividing the acoustic matching layer 10 at the same intervals as the electrodes 4 arranged in a plurality on the compound piezoelectric material 1, propagation of sound waves to adjacent electrodes 4 can be prevented, and it is evident that the acoustic crosstalk can be notably decreased. Therefore, an ultrasonic wave picture high in orientation resolution may be obtained.

In the embodiment shown in Fig. 8, first the acoustic matching layer 10 is formed on the compound piezoelectric material 1 by adhering or pouring, and is then divided. But it is also possible to preliminarily form the acoustic matching layer 10 on the compound piezoelectric material 1 by adhering or pouring, to divide the acoustic matching layer 10, leaving about 1/10 of thickness remaining or removing completely, at the same intervals (spacing) as the plurality electrodes 4 arranged in an array on the compound piezoelectric material 1, to fill the dividing grooves 7 with silicone rubber or similar material, and to adhere on the common electrode plane 5 of the compound piezoelectric material 1.

In the embodiment shown in Fig. 8, the acoustic matching layer provided at the sound wave transmission and reception surface of the compound piezoelectric material which transmits and receives ultrasonic waves is divided at the same intervals (spacing) as the plurality of electrodes disposed at specified intervals (spacings) on the surface opposite to the sound wave transmission and reception surface of the compound piezoelectric material. Therefore, acoustic crosstalk to the adjoining electrode parts can be sizably decreased, and an ultrasonic probe possessing a high orientation resolution performance may be obtained.

## Claims

1. An ultrasonic probe, comprising:
a composite piezoelectric element (1) composed of a piezoelectric ceramic (2) and a material (3) smaller in acoustic impedance than the piezoelectric ceramic;
a plurality of electrodes (4) disposed on one surface of the piezoelectric element(1);
a plurality of electric terminals (12) connected to respective electrodes (4);
a common electrode (5) disposed on the other surface of the piezoelectric element (1); and
an acoustic matching layer (10) disposed on the common electrode (5); characterised in that
the acoustic matching layer (10) is divided by grooves (17) into a plurality of sections at intervals corresponding to the intervals between the plurality of electrodes (4), and the dividing grooves (17) are filled with a material having an acoustic impedance substantially different from that of the acoustic matching layer (10).

2. An ultrasonic probe according to claim 1, wherein the material that the dividing grooves (17) are filled with is made of a blend of silicone rubber and micro-balloons.

3. An ultrasonic probe according to claim 1, wherein an acoustic lens (11) is provided on the acoustic matching layer (10).

4. An ultrasonic probe according to claim 3, wherein the material that the dividing grooves (17) are filled with is made of the same material as an acoustic lens (11).

## Patentansprüche

1. Eine Ultraschallsonde umfassend:
ein zusammengesetztes, piezoelektrische Element (1), das aus einer piezoelektrischen Keramik (2) und einem Material (3) mit kleinerer akustischer Impedanz als die piezoelektrische Keramik zusammengesetzt ist;
eine Mehrzahl Elektroden (4), die an einer Oberfläche des piezoelektrischen Elementes (1) angeordnet sind;
eine Mehrzahl elektrischer Anschlüsse (12), die mit den jeweiligen Elektroden (4) verbunden sind;
eine gemeinsame Elektrode (5), die an der anderen Oberfläche des piezoelektrischen Elementes (1) angeordnet ist; und
eine akustische Anpassungsschicht (10), die auf der gemeinsamen Elektrode (5) angeordnet ist, dadurch gekennzeichnet, daß
die akustische Anpassungsschicht (10) durch Nuten (17) in eine Mehrzahl von Abschnitten mit Intervallen unterteilt ist, die den Intervallen zwischen der Mehrzahl von Elektroden (4) entsprechen, und die Unterteilungsnuten (17) mit einem Material gefüllt sind, das eine akustische Impedanz aufweist, die von derjenigen der akustischen Anpassungsschicht (10) beträchtlich verschieden ist.

2. Eine Ultraschallsonde gemäß Anspruch 1, bei der das Material, mit dem die Unterteilungsnuten (17) gefüllt werden, aus einer Mischung aus Silikongummi und Mikrokügelchen gemacht ist.

3. Eine Ultraschallsonde gemäß Anspruch 1, bei der eine akustische Linse (11) auf der akustischen Anpassungsschicht (10) vorgesehen ist.

4. Eine Ultraschallsonde gemäß Anspruch 3, bei der das Material, mit dem die Unterteilungsnuten (17) gefüllt sind, aus dem gleichen Material wie eine akustische Linse (11) hergestellt ist.

## Revendications

1. Sonde ultrasonore, comprenant :
un élément piézoélectrique composite (1) formé d'une céramique piézoélectrique (2) et d'un matériau (3) ayant une impédance acoustique inférieure à celle de la céramique piézoélectrique,
plusieurs électrodes (4) disposées sur une première surface de l'élément piézoélectrique (1),
plusieurs bornes électriques (12) connectées aux électrodes respectives (4),
une électrode commune (5) disposée sur l'autre surface de l'élément piézoélectrique (1), et
une couche d'adaptation acoustique (10) disposée sur l'électrode commune (5), caractérisée en ce que
la couche d'adaptation acoustique (10) est divisée par des gorges (17) en plusieurs tronçons à des intervalles correspondants aux intervalles compris entre les électrodes (4), et les gorges de séparation (17) sont remplies d'un matériau ayant une impédance acoustique nettement différente de celle de la couche d'adaptation d'impédance (10).

2. Sonde ultrasonore selon la revendication 1, dans laquelle le matériau dont sont remplies les gorges de séparation (17) est formé d'un mélange d'un caoutchouc de silicone et de microballons.

3. Sonde ultrasonore selon la revendication 1, dans laquelle une lentille acoustique (11) est disposée sur la couche d'adaptation acoustique (10).

4. Sonde ultrasonore selon la revendication 3, dans laquelle le matériau dont sont remplies les gorges de séparation (17) est le même que celui de la lentille acoustique (11).
